# EUROPEAN PATENT SPECIFICATION

(11) **EP 0 927 994 B1**
(45) Date of publication and mention of the grant of the patent: **18.10.2006**
(21) Application number: 98124600.2
(22) Date of filing: 23.12.1998
(51) Int. Cl.: G11B 7/24

(54) **Optical information recording medium**
Medium für optische Informationsspeicherung
Medium d' enregistrement d' information par voie optique

(30) Priority: 24.12.1997 JP 36633297
(43) Date of publication of application: 07.07.1999
(73) Proprietor: FUJI PHOTO FILM CO., LTD., Minami-Ashigara-shi, Kanagawa-ken (JP)
(72) Inventor: Shibata, Michihiro, Odawara-shi, Kanagawa-Ken 258 (JP)
(74) Representative: Grünecker, Kinkeldey, Stockmair & Schwanhäusser Anwaltssozietät

(56) References cited:
- EP-A- 0 126 565
- EP-A- 0 410 468
- EP-A- 0 628 956
- EP-A- 0 652 555
- GB-A- 2 198 279
- DATABASE WPI Section Ch, Week 9325 Derwent Publications Ltd., London, GB; Class A04, AN 93-201567 XP002098013 & JP 05 128591 A (TORAY), 25 May 1993
- PATENT ABSTRACTS OF JAPAN vol. 16, no. 323 (P-1386), 15 July 1992 & JP 04 095238 A (MITSUBISHI), 27 March 1992

## Description

### FIELD OF THE INVENTION

This invention relates to an optical information recording medium on which information can be recorded and reproduced by means of a laser beam. More particularly, the invention relates to an optical information recording medium of recordable type (CD-R or DVD-R) having a surface on which letters and designs are printable by inkjet printers.

### BACKGROUND OF THE INVENTION

An optical information recording medium on which information can be only once recorded by means of a laser beam (an optical disc of write-once type) is known as a recordable compact disc (CD-R), and is widely used as a data storage medium for personal computers because it can be read by means of commercially available CD players.

The optical disc of CD-R type (hereinafter, often referred to as simply "CD-R") generally has a multi-layered structure typically comprising a disc-shaped transparent substrate (support), a recording layer comprising an organic dye (often referred to as "recording dye layer"), a light-reflecting layer comprising a metal (hereinafter, often referred to as simply "reflecting layer"), and a protective layer made of resin which are overlaid in order. The information can be recorded by irradiating the disc with a laser beam having a wavelength of near infrared region (usually around 780 nm). By the application of the laser beam, irradiated area of the recording layer is locally heated to change its physical or chemical characteristics so as to form pits in the recording layer. Since the optical characteristics of the formed pits are different from those of the area having been not irradiated, the information is optically recorded. The recorded information can be read by reproducing procedures comprising the steps of irradiating the recording layer with a laser beam having the same wavelength as that of the laser beam employed in the recording procedures, and detecting the difference of light-reflection between the pits and other area.

Most of commercially available compact discs have a protective layer on which the title and/or related design are printed to indicate information recorded in the disc. The title and/or design are printed by means of a screen printing method which is convenient for printing the same title and/or design on a large number of materials. The screen printing method, however, is not advantageously employed for printing the title and/or design on an optical information recording disc of CD-R type, because the CD-R type disc is generally employed for producing a relatively small number of discs on which the same information is optically recorded.

Previously, the information recording disc of CD-R is marked with a hydrophobic ink of writing means on the hydrophobic surface of its protective layer made of UV curing resin. Otherwise, a label is fixed onto the surface of the protective layer to indicate the information recorded in the disc.

The marking given by means of writing means is not good in its appearance and sometimes turns illegible. The label sometimes separates from the protective layer of the information disc.

Recently, printing using an ink jet printer has been proposed to print the title and/or design on CD-R discs. The ink jet printer is advantageous in its low device cost and running cost and its easy handling. Moreover, color printing can easily be made using a color ink jet printer. The problem, however, resides in that the conventional ink jet printer employs an aqueous ink. Therefore, CD-R discs having a hydrophilic surface on its protective layer have been studied.

Japanese Patent Provisional Publication H6(1994)-60432 describes a CD-R disc having a hydrophilic surface on its protective layer so as to easily receive and fix the applied aqueous ink on the hydrophilic surface. The hydrophilic surface is given by placing a hydrophilic layer on the protective layer, the hydrophilic layer having an uneven or rough surface formed by organic or inorganic particles embedded in a hydrophilic resin layer. For instance, the hydrophilic layer is prepared by dispersing synthetic amorphous fine silica particles having approximately 4 µm diameter in a hydrophilic resin layer such as a polyvinyl pyrrolidone layer.

Japanese Patent Provisional Publication H7(1995)-169100 describes a CD-R disc having a aqueous ink-printable protective layer (which is placed on the top of the disc) whose surface is made hydrophilic by incorporating an organic or inorganic filler into a UV curing resin layer. Examples of the fillers include organic fillers (e.g., protein) and inorganic fillers (e.g., synthetic silica) having an average particle size of 10 µm or more.

Japanese Patent Provisional Publication H8(1996)-22641 describes a CD-R disc having a surface layer on its protective layer, in which the surface layer contains a filler such as silica which is in part protruded on the surface of the surface layer.

An optical disc with the features of the pre-characterising portion of claim 1 is known from EP-A-0652555.

### SUMMARY OF THE INVENTION

The present invention has an object to provide an optical information recording medium having improved printablity.

Particularly, the invention has an object to provide an optical information recording medium on which an aqueous ink is rapidly absorbed and fixed to give an improved ink image showing less ink blurring or staining and having even coloring.

The invention resides in an optical information recording medium comprising a transparent substrate, a recording dye layer on which information is recordable by irradiation with a laser beam, a light-reflecting layer, a protective layer, and a water-absorbing layer overlaid in order, wherein the water-absorbing layer comprises water-absorbing particles and a ultraviolet ray-curing resin and has a surface having no wave whose period and height are less than 500 µm and more than 25 µm, respectively, and having a contact angle to water of less than 90°. The contact angle to water is determined at 25°C.

The preferred embodiments of the invention are described below.
(1) The recording medium wherein the contact angle to water is in the range of 40 to 90°, preferably 50 to 87°, more preferably 60 to 85°.
(2) The recording medium wherein the water-absorbing particles comprise cellulose acetate or protein. The protein is most preferred.
(3) The recording medium wherein the water-absorbing particles have a mean particle size in the range of 1 to 8 *µ*m, preferably 3 to 8 *µ*m.
(4) The recording medium wherein the water-absorbing layer comprises the water-absorbing particles and the ultraviolet ray-curing resin in a weight ratio of 30:70 to 80:20, preferably 35:65 to 70:30.
(5) The recording medium wherein the water-absorbing layer has a thickness as much as 2 to 5 times (preferably 2 to 4 times, more preferably 2.5 to 4 times) of the mean particle size of the water-absorbing particles.
(5) The recording medium wherein the water-absorbing layer has a thickness in the range of 10 to 20 *µ*m, preferably 12 to 18 *µ*m.

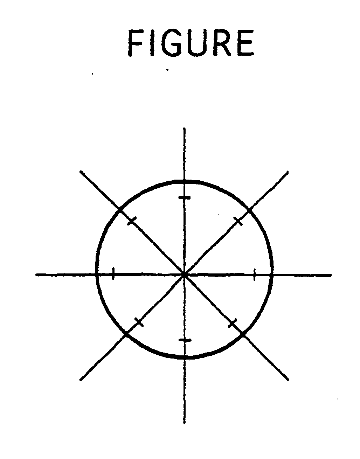

### BRIEF DESCRIPTION OF THE DRAWING

Figure illustrates to the positions at which the wave conditions on the surface of water-absorbing layer of an optical information recording medium are measured.

### DETAILED DESCRIPTION OF THE INVENTION

The optical information recording medium of the invention comprises a transparent substrate, a recording dye layer, a light-reflecting layer, a protective layer, and a water-absorbing layer overlaid in order, and is characterized in that the water-absorbing layer comprises specific materials and has specific physical properties.

The transparent substrate, recording dye layer, light-reflecting layer, protective layer, and water-absorbing layer of the optical information recording medium of the invention are described below in order.

The transparent substrate (support) can be made of any of materials known as those for the producing the substrate of the known optical information recording medium. Examples of the materials include glass, polycarbonate, acrylic resins such as polymethyl methacrylate, vinyl chloride resins such as polyvinyl chloride and vinyl chloride copolymer, epoxy resins, amorphous polyolefins, and polyesters. The material can be employed in combination, if desired. The material is molded to give a film or a rigid plate. Polycarbonate is most preferred from the viewpoints of anti-humidity, dimensional stability and preparation cost.

The substrate may have an undercoating layer on its surface of the recording layer side, so as to enhance surface smoothness and adhesion and to keep the dye recording layer from deterioration. Examples of the materials for the undercoating layer include polymers such as polymethyl methacrylate, acrylate-methacrylate copolymer, styrene-maleic anhydride copolymer, polyvinyl alcohol, N-methylolacrylamide, styrene-vinyltoluene copolymer, chloro-sulfonated polyethylene, nitrocellulose, polyvinyl chloride, chlorinated polyolefin, polyester, polyimide, vinyl acetate-vinyl chloride copolymer, ethylene-vinyl acetate copolymer, polyethylene, polypropylene, and polycarbonate, and surface treating agents such as a silane-coupling agent.

The undercoating layer can be formed by coating the coating solution (in which one or more of the above-mentioned materials are dissolved or dispersed) on the surface of the substrate by the known coating methods such as spin-coat, dip-coat, and extrusion-coat. The undercoating layer generally has a thickness of 0.005 to 20 µm, preferably 0.01 to 10 *µ*m.

On the surface of the substrate or on the undercoating layer, pregroove for tracking or giving address signals is formed. The pregroove is preferably formed directly on the surface of the substrate when the substrate is molded from polymer material by injection or extrusion.

Alternatively, the pregroove can be provided on the surface of the substrate by placing a pregroove layer. The pregroove layer can be produced from a mixture of a monomer (such as monoester, diester, triester and tetraester) of acrylic acid (or its oligomer) and a photopolymerization initiator. The pregroove layer can be produced by the steps of coating a precisely produced stamper with the mixture of the polymerization initiator and the monomer such as the above-mentioned acrylic ester, placing a substrate on the formed layer, and irradiating the formed layer with ultra-violet rays through the stamper or the substrate so as to cure the layer as well as to combine the cured layer and the substrate. The substrate to which the cured layer is attached is separated from the stamper, to give the desired substrate equipped with the pregroove layer. The thickness of the pregroove layer is generally in the range of 0.05 to 100 *µ*m, preferably in the range of 0.1 to 50 *µ*m.

The pregroove formed on the substrate preferably has a depth in the range of 0.1 to 0.3 *µ*m and a half-width of 0.2 to 0.9 *µ*m. A depth of 0.15 to 0.2 *µ*m of the pregroove is preferably adopted because such pregroove can enhance the sensitivity without decreasing the light-reflection on the substrate. The optical disc having a recording layer formed on the deep pregroove and a light-reflection layer shows a high sensitivity, and hence is employable even in a recording system using a laser beam of low power. This means that a semiconductor laser of low output power can be employed, and the life of semiconductor laser can be prolonged.

On the substrate provided with the pregroove, the recording dye layer is placed. The dye employed for the recording layer is not particularly restricted. Examples of the dyes include cyanine dyes, phthalocyanine dyes, imidazoquinoxaline dyes, pyrylium/thiopyrylium dyes, azulenium dyes, squarilium dyes, metal (e.g., Ni, Cr) complex dyes, naphthoquinone dyes, anthraquinone dyes, indophenol dyes, merocyanine dyes, oxonol dyes, naphtho-aniline dyes, triphenylmethane dyes, triallylmethane dyes, aminium/diimmonium dyes and nitroso compounds. Among them, preferred are cyanine dyes, phthalocyanine dyes, azulenium dyes, squarilium dyes, oxonol dyes, and imidazoquinoxaline dyes. In particular, cyanine dyes are preferred. Examples of the cyanine dyes are described in, for example, Japanese Patent Provisional Publication H4(1992)-175188.

The recording dye layer can be formed on the substrate (support) by the steps of dissolving the dye and, preferably an anti-fading agent (and if desired, a binder) in a solvent to prepare a coating solution, applying the coating solution onto the substrate to form a layer, and then drying the formed layer. In the case where the anti-fading agent is added into the coating solution, the amount of the agent is in the range of 0.1 to 50 wt.%, preferably 0.5 to 45 wt.%, more preferably 3 to 40 wt.%, most preferably 5 to 25 wt.%, based on that of the dye.

Examples of the solvents for preparing the coating solution include esters such as butyl acetate and cellosolve acetate; ketones such as methyl ethyl ketone, cyclohexanone and methyl isobutyl ketone; chlorinated hydrocarbons such as dichloromethane, 1,2-dichloroethane and chloroform; amides such as dimethylformamide; hydrocarbons such as cyclohexanone; ethers such as tetrahydrofuran, diethyl ether and dioxane; alcohols such as ethanol, n-propanol, isopropanol, n-butanol, and diacetone alcohol; fluorine-containing solvents such as 2,2,3,3-tetrafluoropropanol; and glycol ethers such as ethyleneglycol monomethyl ether, ethyleneglycol monoethyl ether, and propyleneglycol monomethyl ether. The solvent may be employed singly or in combination, in consideration of the solubility of the used compound in the solvent. The coating solution can further include auxiliary additives such as an oxidation inhibitor, a UV absorber, a plasticizer, and a lubricant.

Examples of the anti-fading agents include nitroso compounds, metal complexes, diimmonium salts, and aluminum salts. These examples are described in, for example, Japanese Patent Provisional Publications H2(1990)-300288, H3(1991)-224793 and H4(1992)-146189.

Examples of the binders include natural-origin polymers such as gelatin, cellulose derivatives, dextran, rosin, and rubber; hydrocarbon polymer resins such as polyethylene, polypropylene, polystyrene and polyisobutyrene; vinyl polymers such as polyvinyl chloride, polyvinylidene chloride, and vinyl chloride-vinyl acetate copolymer; acrylate polymers such as polymethyl acrylate and polymethyl methacrylate; polyvinyl alcohol, chlorinated polyethylene; epoxy resins; butyral resins, rubber derivatives, and thermosetting resins such as prepolymers of phenol-formaldehyde. The binder is optionally employed so that the amount of the binder may be not more than 20 weight parts (preferably not more than 10 weight parts, further preferably not more than 5 weight parts) based on 100 weight parts of the dye.

The concentration of the dye in the coating liquid generally is in the range of 0.01 to 10 wt.%, preferably 0.1 to 5 wt.%.

The coating can be performed by known methods such as spray coat, spin coat, dip coat, roller coat, blade coat, doctor roller coat and screen print. The recording dye layer can be a single layer or can comprise plural layers. The thickness of the recording dye layer is generally in the range of 20 to 500 nm, preferably 50 to 300 nm.

On the recording dye layer, the light-reflecting layer is placed so as to enhance light-reflection in the procedure of reproduction of information.

The light-reflecting material to be used for the formation of the light-reflecting layer should show a high reflection to the laser beam. Examples of the light-reflecting materials include metals and sub-metals such as Mg, Se, Y, Ti, Zr, Hf, V, Nb, Ta, Cr, Mo, W, Mn, Re, Fe, Co, Ni, Ru, Rh, Pd, Ir, Pt, Cu, Ag, Au, Zn, Cd, Al, Ga, In, Si, Ge, Te, Pb, Po, Sn, and Bi. Stainless steel film is also employable. The material can be employed singly, in combination, or in the form of alloy. Particularly preferred are Ag and their alloys. In more detail, the light-reflecting layer preferably comprises Ag or an alloy of Ag with at least one metal selected from the group consisting of Pt, Cu, Au and Al. In the case where the alloy of Ag is employed, the content of the metals other than Ag is less than 40 wt.%, preferably less than 30 wt.%, and further preferably less than 20 wt.%. The light-reflecting layer may further contain auxiliary elements (e.g., O, F and S) or compounds so as to improve characteristics such as preservation stability.

The light-reflecting layer can be formed on the recording layer, for example, by vacuum deposition, sputtering, or ion-plating. The thickness of the light-reflecting layer generally is 10 to 800 nm, preferably 20 to 500 nm, more preferably 50 to 300 nm.

On the light-reflecting layer, a protective layer is provided so as to protect the recording dye layer and the light-reflecting layer from chemical deterioration or physical damage. Besides on the light-reflecting layer, another protective layer can be also placed on the substrate on the face not having the dye recording layer so as to enhance the scratch resistance and the moisture resistance of the medium. The protective layer can be made of inorganic materials such as SiO, SiO₂, MgF₂, SnO₂, Si₃N₄; or organic materials such as thermo-plastic resins, thermo-setting resins, and W curable resins. On the light-reflecting layer and/or the substrate, the protective layer can be formed by laminating a film of plastic material using an adhesive. The inorganic material can be also placed on the light-reflecting layer and/or the substrate by vacuum deposition or sputtering. Otherwise, the organic polymer material layer can be formed by the steps of dissolving the polymer material to prepare a coating solution, applying the coating solution to form a layer, and then drying the formed layer to give the protective layer. For example, a UV curable resin is dissolved in a solvent and applied on the light-reflecting layer and/or the substrate, and then cured by applying ultraviolet rays to the formed layer. The protective layer can contain various additives such as an anti-static agent and an oxidation inhibitor. The thickness of the protective layer generally is in the range of 0.1 to 100 *µ*m.

On the protective layer, a water-absorbing layer is provided. The water-absorbing layer comprises water-absorbing particles and a ultraviolet ray curing resin (UV resin) and is formed to have a surface having no wave whose period and height are less than 500 µm and more than 25 µm, respectively, and having a contact angle to water of less than 90° (at 25°C), preferably 40 to 90°, more preferably 50 to 87°, most preferably 60 to 85°. By forming the surface to have such contact angle to water, an aqueous ink is easily accepted by the water-absorbing layer and give a clear printed image. The water-absorbing layer having such excellent property can be prepared by carefully coating a mixture of a water-absorbing particles and a ultraviolet ray curing resin evenly on the protective layer. The mixture may contain an organic dispersing medium or solvent. The mixture can be coated on the protective layer, for instance, by a screen printing method.

The water-absorbing layer preferably has a thickness in the range of 10 to 20 µm, more preferably 12 to 18 *µ*m. In the water-absorbing layer, the water-absorbing particles and the UV resin may be contained in a ratio of 30:70 to 80:20, preferably 35:65 to 70:30 (in terms of particles:UV resin) .

There are no specific limitations with respect to the water-absorbing particles, so far as the particles are hydrophilic and absorb enough amount of water. Preferred are fine particles made of water-absorbing material. Examples of the water-absorbing particles are particles of material of natural origin. Examples of the preferred materials include monosaccharides such as glucose, disaccharides such as sugar and malt sugar, polysaccharides such as cellulose and starch, cellulose esters such as cellulose inorganic acid esters (e.g., cellulose sulfate and cellulose phosphate), cellulose organic acid esters (e.g., cellulose formate and cellulose acetate), and cellulose ethers (carboxymethylcellulose sodium salt and hydroxyethylcellulose), polypeptides of natural origin, and proteins. Preferred are cellulose acetate and protein. Most preferred is protein.

The water-absorbing particles preferably have such an average size that most of the particles incorporated into the water-absorbing layer are embedded in the layer and only small portions are exposed on the surface of the water-absorbing layer. Therefore, the particles preferably have an average particle size in the range of 1 to 8 *µ*m, more preferably 3 to 8 *µ*m. The ratio of the average particle size of the water-absorbing particles to the thickness of the water-absorbing layer is preferably in the range of 1/5 to 1/2, more preferably 1/4 to 1/2, most preferably 1/4 to 1/2.5.

The UV resin (or UV curable resin) employed for preparation of the water-absorbing layer is favorably employed in consideration of productivity. The UV curing resin generally comprises a photopolymerization initiator and a polymerizable compound having at least one reactive acrylic group in the molecule (i.e., a functional monomer or oligomer or mixture of them). Examples of the monofunctional monomers include tetrahydrofurfuryl acrylate, ethylcarbitol acrylate, dicyclopentyloxy acrylate, phenylcarbitol acrylate, nonylphenoxyethylacrylate, hydroxyethyl acrylate, 2-hydroxy-3-phenoxypropyl acrylate, acrylamide, acryloylmorpholine, dimethylacrylamide, diethylacrylamide, and N-vinylpyrrolidone. Examples of the multi-functional acrylates include polyol polyacrylate, polyester acrylate, epoxy acrylate, urethane acrylate, pentaerythritol di(tri)acrylate, N,N'-methylenebisacrylamide, and hexamethylenebisacrylamide. Preferred are mono- or multi-functional monomers or oligomers having acrylamide group, vinylamino group or polar groups such as hydroxyl group.

Examples of the photopolymerization initiator include benzoin compounds and their ethers (e.g., benzoin, benzoinmethyl ether, benzoinethyl ether, and benzoinisopropyl ether), benzophenone compounds (e.g., benzophenone), benzyl compounds (e.g., benzyl, benzylmethyl ketal, benzylethyl ketal), and hydroxyalkylphenyl ketone compounds (e.g., 1-phenyl-2-hydroxy-2-methyl-2-propane).

The optical information recording medium of the invention can be not only in the form of an optical disc of CD-R type but also in the form of a recordable digital video disc (DVD-R). The optical information recording medium of the invention can be in the form of sandwich type.

The recording/reproducing procedures are carried out in the following manner.

Using the information recording medium of the invention, the information recording can be performed not only at a normal line rate (1.2 to 1.4 m/sec., in the case of CD format) but also at a fourfold line rate, a sixfold or more line rate.

The information recording medium is made to rotate at a predetermined line rate (1.2 to 1.4 m/sec., in the case of CD format). On the rotating medium, a recording light such as a semiconductor laser beam is applied through the transparent substrate. By the application of the laser beam, pits are formed in the recording layer. The pit is assumed to be produced by local vacancy of the recording layer, deformation of the dye recording layer and/or the substrate, and change of the physical or chemical characteristics of the dye recording layer. The recording light preferably is a semiconductor laser having an oscillation frequency in the range of 500 to 850 nm. The preferred beam wavelength is in the range of 500 to 800 nm. In the case of the CR-R type recording medium, the laser beam preferably has a wavelength of 770 to 790 nm. For the DVD-R type recording medium, the wavelength preferably is in the range of 620 to 680 nm.

The reproduction of the recorded information can be accomplished by applying a semiconductor laser beam on the medium rotating at a line rate in the range of a normal rate to a thirty-fold rate. The light-reflection is then detected from the substrate side.

The present invention is further described by the following non-restrictive working examples.

### [Example 1]

The indolenine type cyanine dye (A) and anti-fading agent (B) shown below were employed for the preparation of a recording dye layer. The cyanine dye and the anti-fading agent in 10 wt.% amount per the amount of the cyanine dye were dissolved in 2,2',3,3'-tetrafluoropropanol, to prepare a coating solution for preparing a recording dye layer. Thus prepared coating solution had a concentration of 2.5 weight %.

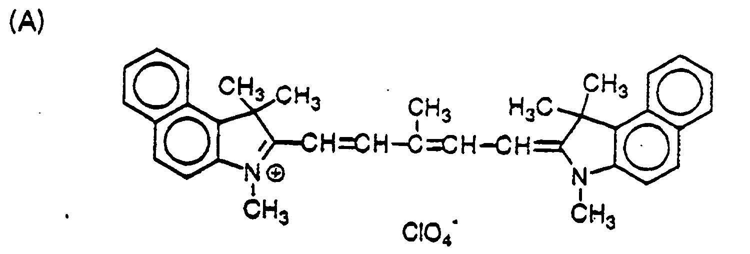

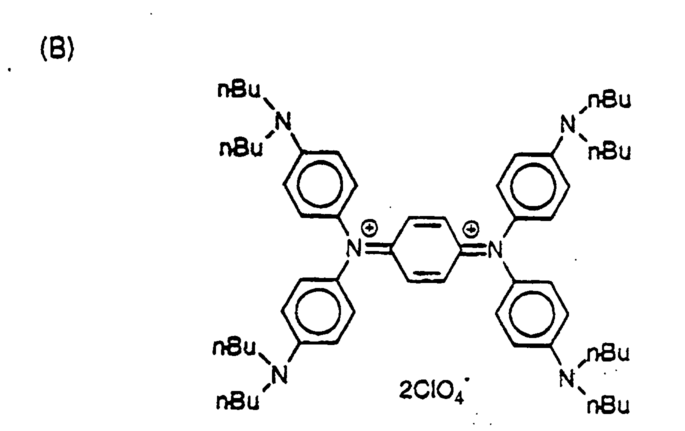

The coating solution was then applied by spin-coating on the surface (on which a pregroove was formed) of a polycarbonate substrate (diameter: 120 mm, thickness: 1.2 mm, Panlight AD5503 [trade name], available from Teijin Limited) to give a recording die layer (average thickness at the pregroove: approx. 150 nm). The pregroove was beforehand formed spirally on the substrate (track pitch: 1.6 µm, pregroove width: 0.4 µm, depth: 0.16 µm) by injection molding of the substrate.

On thus formed dye layer, a light-reflecting layer of Ag (thickness: about 100 nm) was provided by sputtering.

Subsequently, a UV curable photopolymer (SD-2003 [trade name], available from Dainippon Ink & Chemicals, Inc.) was applied by spin-coating on the light-reflecting layer under the condition that the rotation rate was varied from 100 r.p.m. to 2,000 r.p.m., and then irradiated with ultraviolet rays from a high pressure mercury lamp to give a cured protective layer of 10 *µ*m thick.

On the surface of thus formed protective layer, a water-absorbing layer was formed by the process comprising the following three steps.

### 1) Preparation of UV resin composition

The following components were mixed to give a UV resin composition:

| | |
|---|---|
| Acrylate of acryl type | 16 wt.% |
| Noncyclic aliphatic monomer | 50 wt.% |
| Alicyclic monomer | 25 wt.% |
| Photopolymerization initiator | 2 wt.% |
| Auxiliary agent | 7 wt.% |

The resulting UV resin composition had a rotary viscosity of 50 to 58 cps at 25°C.

### 2) Preparation of coating solution for water-absorbing layer

The UV resin composition obtained above and water-absorbing protein particles (mean size: 5 µm) were mixed in a weight ratio of 60:40, to give a coating solution (rotary viscosity: 95 to 100 cps at 25°C) for forming water-absorbing layer.

### 3) Formation of water-absorbing layer

The coating solution was coated on the protective layer by a screen printing method using a 300 mesh screen. On the coated layer was irradiated with UV light under the following conditions to give a cured water-absorbing layer having a thickness of approximately 13 µm.

Irradiation conditions:
Two metal halide lamps (80 w/cm², power 400 W) were employed. Distance from the lamps: 15 cm.
Belt speed: 10 m/min.
Total light amount: approximately 240 mJ/cm²

By the above-described steps, an optical information recording medium (i.e., optical disc) of CD-R type according to the invention, which was composed of a substrate, a recording dye layer, a light-reflecting layer, a protective layer and a water-absorbing layer, was prepared.

### [Example 2]

The procedures of Example 1 were repeated except for replacing the water-absorbing protein particles with cellulose acetate particles (mean particle size: 7 *µ*m) in the step of the formation of a water-absorbing layer, to prepare a CD-R optical disc of the invention. In the process, the coating solution for the preparation of water-absorbing layer had a rotary viscosity of 92 to 98 cps.

### [Example 3]

The procedures of Example 1 were repeated except for replacing the light-reflecting layer of Au with a light-reflecting layer of Ag having 150 nm thickness, to prepare a CD-R optical disc of the invention.

### [Example 4]

The procedures of Example 3 were repeated except for replacing the coating solutions for the preparation of recording dye layer and water-absorbing layer with the below-described coating solutions.

### 1) Preparation of recording dye layer

The indolenine type cyanine dye (C) and anti-fading agent (D) shown below were employed for the preparation of a recording dye layer. The cyanine dye and the anti-fading agent in 10 wt.% amount per the amount of the cyanine dye were dissolved in 2,2',3,3'-tetrafluoropropanol, to prepare a coating solution for preparing a recording dye layer. Thus prepared coating solution had a concentration of 2.5 weight %.

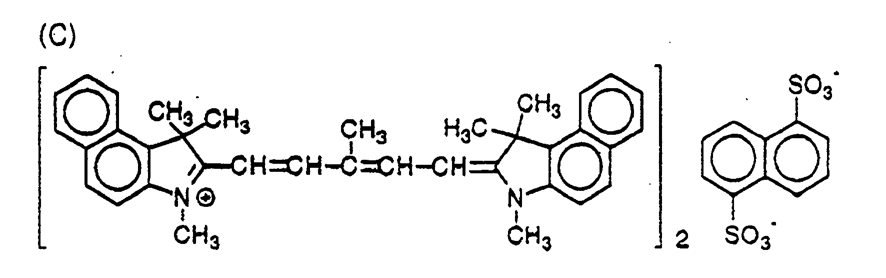

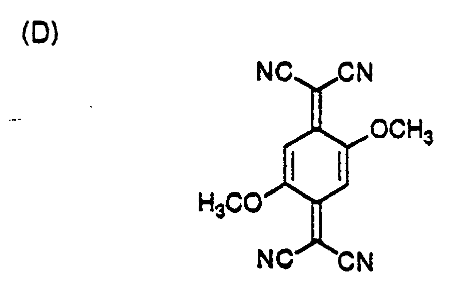

### 1) Preparation of UV resin composition

The following components were mixed to give a UV resin composition:

| | |
|---|---|
| Acrylate of polyvinyl type | 45 wt.% |
| Urethane oligomer | 4 wt.% |
| Alicyclic monomer | 27 wt.% |
| Noncyclic aliphatic monomer | 19 wt.% |
| Photopolymerization initiator | 4 wt.% |
| Auxiliary agent | 1 wt.% |

The resulting UV resin composition had a rotary viscosity of 60 to 63 cps at 25°C.

### 2) Preparation of coating solution for water-absorbing layer

The UV resin composition obtained above and water-absorbing protein particles (mean size: 5 *µ*m) were mixed in a weight ratio of 65:35, to give a coating solution (rotary viscosity: 90 to 95 cps at 25°C) for forming water-absorbing layer.

### [Comparison Example 1]

The procedures of Example 1 were repeated except for replacing the water-absorbing protein particles with cellulose acetate particles (mean particle size: 20 µm) to form a water-absorbing layer of 17 *µ*m thick, to prepare a CD-R optical disc for comparison. In the process, the coating solution for the preparation of water-absorbing layer had a rotary viscosity of 98 to 102 cps.

### [Comparison Example 2]

The procedures of Example 1 were repeated except for employing no protein particles to form a coating layer of 16 µm thick, to prepare a CD-R optical disc for comparison.

### [Comparison Example 3]

The procedures of Example 1 were repeated except that the UV resin composition and the protein particles having a mean particle size of 5 µm were employed in a weight ratio of 4:1 to form a water-absorbing layer of 15 *µ*m thick, to prepare a CD-R optical disc for comparison. In the process, the coating solution for the preparation of water-absorbing layer had a rotary viscosity of 98 to 102 cps.

### [Comparison Example 4]

The procedures of Example 1 were repeated except that the UV resin composition and the protein particles having a mean particle size of 10 µm were employed in a. weight ratio of 10:1 to form a water-absorbing layer of 15 *µ*m thick, to prepare a CD-R optical disc for comparison. In the process, the coating solution for the preparation of water-absorbing layer had a rotary viscosity of 65 to 68 cps.

### [Description of characteristics of discs of Examples and Comparison Examples]

Some characteristics of the water-absorbing layers of the optical discs of Examples and Comparison Examples are set forth in Table 1.

**Table 1**

| Particles Material (mean size) | | | Ratio of Particles:UV resin | Thickness of Layer |
|---|---|---|---|---|
| Example 1 | protein | (5 *µ*m) | 40:60 | 13 *µ*m |
| Example 2 | cellulose acetate | (7 *µ*m) | 40:60 | 13 *µ*m |
| Example 3 | protein | (5 *µ*m) | 40:60 | 13 *µ*m |
| Example 4 | protein | (5 *µ*m) | 35:65 | 13 *µ*m |
| Com.Ex. 1 | protein | (20 *µ*m) | 40:60 | 17 *µ*m |
| Com. Ex. 1 | none | | 0:100 | 16 *µ*m |
| Com. Ex. 1 | protein | (5 *µ*m) | 20:60 | 15 *µ*m |
| Com. Ex. 1 | protein | (10 *µ*m) | 10 :100 | 15 *µ*m |

### [Evaluation of Optical Discs]

The optical discs prepared in Examples and Comparison Examples were evaluated on the properties of the surfaces of their water-absorbing layers. Further, on the surfaces of the water-absorbing layers were printed an image using a commercially available ink jet printer. Then, the printed image was examined for evaluation.

### (1) Wave conditions on the water-absorbing layer

The water-absorbing layer was measured in the wave conditions of its surface plane using a commercially available wave measuring device of needle touch type (DEKTAK II, available from Soloan Corp.) in the manner described below.

As is illustrated in Figure in the attached drawing, four straight lines crossing with each other at the center point were drawn. Subsequently, a circle with a radius of 40 mm was described around the center. The eight (8) crossing points of the circle and the straight lines were marked. On each of the marked points was placed the needle of the measuring device, and the needle was moved along the line toward the outer peripheral of the disc for 1 mm, while tracing the waveform on the surface plane. From the eight traced waveforms, an average height of the waves having a period of less than 500 µm and an average height of the waves having a period of more than 500 µm were determined.

### (2) Contact angle to water on the water-absorbing layer

The contact angle to water was measured using a commercially available measuring apparatus at 25°C.

### (3) Evaluation of ink image printed by ink jet printer

### 1) Color unevenness

A color ink image was printed on the surface of the water-absorbing layer by a commercially available color ink jet printer (MJ-500C, available from Epson Corp., Japan). The color ink image was examined by eyes on the period to dryness (I) of the printed image as well as the conditions of the color ink image and marked by the following criteria:
A: no color unevenness is observed
B: some color unevenness is observed
C: ink is not well fixed on the surface

### 2) Ink blurring

Characters of thin line (0.5 mm) were printed on the surface of the water-absorbing layer using the same ink jet printer. The printed characters were examined by eyes on the period to dryness (II) of the printed characters as well as the blurring of the printed characters and marked by the following criteria:
AA: no blurring is observed
BB: some blurring is observed

The results are set forth in Table 2.

**Table 2**

| | Height of Wave | | Contact Angle | Ink image unevenness /period I | conditions blurring /period II |
|---|---|---|---|---|---|
| | ≤500 µm | 500 µm< | | | |
| Example 1 | 6 *µ*m | 8 *µ*m | 80° | A/30 sec. | AA/promptly |
| Example 2 | 5 *µ*m | 7 *µ*m | 80° | A/50 sec. | AA/promptly |
| Example 3 | 7 *µ*m | 7 *µ*m | 80° | A/30 sec. | AA/promptly |
| Example 4 | 8 *µ*m | 8 *µ*m | 80° | A/30 sec. | AA/promptly |
| Com.Ex. 1 | 40 *µ*m | 10 *µ*m | 85° | B/60 sec. | unexamined |
| Com. Ex . 2 | 7 *µ*m | 6 *µ*m | 110° | C/--- | unexamined |
| Com.Ex. 3 | 5 *µ*m | 5 *µ*m | 100° | B/10 sec. | BB/2 min. |
| Com.Ex. 4 | 8 *µ*m | 7 *µ*m | 100° | B/15 sec. | BB/2 min. |

As is seen from the results of Table 2, the optical disc of the invention which has little wave and small contact angle to water on its uppermost water-absorbing layer (which are embodied by Examples 1 to 4) can be printed by an ink jet printer under good conditions with little color unevenness and ink blurring. Further, the printed ink is rapidly dried to give a clear ink image.

In contrast, although the optical disc of Comparison Example 1 having a small contact angle to water shows relatively good ink absorption, the disc has a noticeable wave on its uppermost water-absorbing layer to give a poor color image with color unevenness. The optical disc of Comparison Example 2 containing no water-absorbing particles has no noticeable wave on its uppermost water-absorbing layer but gives a poor ink image with marked color unevenness due to possibly the large contact angle. The optical discs of Comparison Examples 3 and 4 also have no noticeable wave on their uppermost water-absorbing layer but gives a poor ink image with color unevenness due to possibly the large contact angle.

## Claims

1. An optical information recording medium comprising a transparent substrate, a recording dye layer on which information is recordable by irradiation with a laser beam, a light-reflecting layer, a protective layer, and a water-absorbing layer overlaid in order, wherein the water-absorbing layer comprises water-absorbing particles and a ultraviolet ray-curing resin **characterised in that** the water-absorbing layer has a surface having no wave whose period and height are less than 500 µm and more than 25 µm, respectively, and having a contact angle to water of less than 90°.

2. The recording medium of claim 1, wherein the water-absorbing particles comprise cellulose acetate or protein.

3. The recording medium of claim 1, wherein the water-absorbing particles have a mean particle size in the range of 1 to 8 µm.

4. The recording medium of claim 1, wherein the water-absorbing layer comprises the water-absorbing particles and the ultraviolet ray-curing resin in a weight ratio of 30:70 to 80:20.

5. The recording medium of claim 3, wherein the water-absorbing layer has a thickness as much as 2 to 5 times of the mean particle size of the water-absorbing particles.

6. The recording medium of claim 1, wherein the water-absorbing layer has a thickness of 10 to 20 µm.

## Patentansprüche

1. Ein Medium zur optischen Informationsspeicherung, das ein transparentes Substrat, eine Aufzeichnungsfarbschicht, auf der Information durch Bestrahlung mit einem Laserstrahl zu speichern ist, eine Licht reflektierende Schicht, eine schützende Schicht und eine Wasser absorbierende Schicht umfasst, die in dieser Reihenfolge übereinander gelegt sind, wobei die Wasser absorbierende Schicht Wasser absorbierende Partikel und ein durch ultraviolette Strahlen härtendes Harz umfasst, das **dadurch gekennzeichnet ist, dass** die Wasser absorbierende Schicht eine Oberfläche ohne eine Welle aufweist, deren Periode und Höhe jeweils weniger als 500 µm und mehr als 25 µm betragen, und einen Kontaktwinkel zu Wasser von weniger als 90 ° aufweist.

2. Das Speichermedium von Anspruch 1, wobei die Wasser absorbierenden Partikel Zelluloseacetat oder Protein umfassen.

3. Das Speichermedium von Anspruch 1, wobei die Wasser absorbierenden Partikel eine mittlere Partikelgröße in dem Bereich von 1 bis 8 µm aufweisen.

4. Das Speichermedium von Anspruch 1, wobei die Wasser absorbierende Schicht die Wasser absorbierenden Partikel und das durch ultraviolette Strahlen härtende Harz in einem Gewichtsverhältnis von 30 : 70 bis 80 : 20 umfasst.

5. Das Speichermedium von Anspruch 3, wobei die Wasser absorbierende Schicht eine Dicke des bis zu 2 - 5-fachen der mittleren Partikelgröße der Wasser absorbierenden Partikel aufweist.

6. Das Speichermedium von Anspruch 1, wobei die Wasser absorbierende Schicht eine Dicke von 10 bis 20 µm aufweist.

## Revendications

1. Support d'enregistrement d'informations optiques comprenant un substrat transparent, une couche de teinte d'enregistrement sur laquelle des informations peuvent être enregistrées par irradiation avec un faisceau laser, une couche réfléchissant la lumière, une couche protectrice et une couche absorbant l'eau superposés dans l'ordre, dans lequel la couche absorbant l'eau comprend des particules absorbant l'eau et une résine durcissant sous l'action de rayons ultraviolets et **caractérisé en ce que** la couche absorbant l'eau a une surface n'ayant aucune ondulation dont la période et la hauteur sont inférieures à 500 µm et supérieures à 25 µm, respectivement, et ayant un angle de contact avec l'eau inférieur à 90°.

2. Support d'enregistrement selon la revendication 1, dans lequel les particules absorbant l'eau comprennent de l'acétate de cellulose ou une protéine.

3. Support d'enregistrement selon la revendication 1, dans lequel les particules absorbant l'eau ont une taille moyenne de particule dans la gamme de 1 à 8 µm.

4. Support d'enregistrement selon la revendication 1, dans lequel la couche absorbant l'eau comprend les particules absorbant l'eau et la résine durcissant sous l'action de rayons ultraviolets en un rapport en poids de 30 : 70 à 80 : 20.

5. Support d'enregistrement selon la revendication 3, dans lequel la couche absorbant l'eau a une épaisseur qui s'élève à autant que 2 à 5 fois la taille moyenne de particule des particules absorbant l'eau.

6. Support d'enregistrement selon la revendication 1, dans lequel la couche absorbant l'eau a une épaisseur de 10 à 20 µm.
